(19) **Europäisches Patentamt / European Patent Office / Office européen des brevets**

(11) **EP 1 439 756 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(21) Anmeldenummer: **02800090.9**

(22) Anmeldetag: **18.09.2002**

(51) Int Cl.:
***A22C 13/00*** *(2006.01)*

(86) Internationale Anmeldenummer:
**PCT/EP2002/010445**

(87) Internationale Veröffentlichungsnummer:
**WO 2003/028470 (10.04.2003 Gazette 2003/15)**

(54) **STÄRKEHALTIGE, SCHLAUCHFÖRMIGE NAHRUNGSMITTELHÜLLE MIT ÜBERTRAGBARER BESCHICHTUNG SOWIE VERFAHREN ZU DEREN HERSTELLUNG**

TUBULAR FOOD CASING CONTAINING STARCH AND HAVING A TRANSFERABLE COATING, AND METHOD FOR PRODUCING THE SAME

ENVELOPPE POUR PRODUITS ALIMENTAIRES, CONTENANT DE L'AMIDON, EN FORME DE TUYAU ET POURVUE D'UN REVETEMENT POUVANT ETRE TRANSFERE ET PROCEDE DE FABRICATION DE LADITE ENVELOPPE

(84) Benannte Vertragsstaaten:
**BE CZ DE ES FR**

(30) Priorität: **25.09.2001 DE 10147155**

(43) Veröffentlichungstag der Anmeldung:
**28.07.2004 Patentblatt 2004/31**

(73) Patentinhaber: **Kalle GmbH**
**65203 Wiesbaden (DE)**

(72) Erfinder:
- **KÖNIG, Martina**
  **65207 Wiesbaden (DE)**
- **FERON, Bernhard**
  **65185 Wiesbaden (DE)**
- **DELIUS, Ulrich**
  **60529 Frankfurt (DE)**

- **NAIEF, Monif**
  **65366 Geisenheim (DE)**
- **ZIEMES, Hans-Gerd**
  **47804 Krefeld (DE)**

(74) Vertreter: **Plate, Jürgen et al**
**Zounek Plate Schweitzer**
**Patentanwaltskanzlei**
**Rheingaustrasse 196**
**65203 Wiesbaden (DE)**

(56) Entgegenhaltungen:
| | |
|---|---|
| **EP-A- 0 400 484** | **EP-A- 0 709 030** |
| **EP-A- 0 986 957** | **EP-A- 0 992 194** |
| **WO-A-97/36798** | **WO-A-98/31731** |
| **DE-A- 19 500 470** | **DE-A- 19 704 737** |
| **DE-A- 19 729 306** | **DE-A- 19 805 925** |
| **DE-A- 19 822 979** | |

**Beschreibung**

Die Erfindung betrifft eine ein- oder mehrschichtige, schlauchförmige Nahrungsmittelhülle, wobei die Hülle oder mindestens eine an der Oberfläche der Hülle liegende Schicht ein Gemisch aus a) thermoplastischer Stärke oder einem thermoplastischen Stärkederivat und b) mindestens einem anderen, natürlichen oder synthetischen Polymer umfaßt. Sie betrifft ferner ein Verfahren zur Herstellung der Hülle.

Nahrungsmittelhüllen, speziell Wursthüllen, bestehen häufig aus Naturdarm oder aus Kollagen, das ebenfalls aus tierischen Quellen gewonnen wird. Nach dem Auftreten von Tierseuchen (BSE) bestehen jedoch Vorbehalte gegen Hüllen aus solchem Material, in manchen Ländern ist ihre Verwendung sogar schon verboten. Verbreitet sind daneben Hüllen aus gegebenenfalls faserverstärkter regenerierter Cellulose oder aus synthetischen Polymeren. Die Herstellung von Hüllen aus regenerierter Cellulose erfolgt jedoch in aufwendigen und umweltbelastenden Verfahren. Hüllen aus synthetischen Polymeren wiederum sind allgemein wenig durchlässig für Sauerstoff und/oder Wasserdampf. Sie sind in der Regel auch nicht durchlässig für Kalt- oder Heißrauch. Hüllen aus anderem Material, beispielsweise aus eiweiß- oder acrylatbeschichtetem Gewebe, haben dagegen nur eine geringe Bedeutung.

Bekannt sind auch Hüllen, die mit thermoplastischer Stärke oder einem thermoplastischen Stärkederivat hergestellt sind (EP-A 709 030). Die Stärke oder das Stärkederivat sind dabei in der Regel abgemischt mit einem durch Polykondensation oder Polyaddition erhältlichen Polymer (EP-A 1 054 599), insbesondere mit einem Polyesterurethan (DE-A 198 22 979).

Ebenfalls bekannt sind Nahrungsmittelhüllen, die eine Beschichtung aufweisen mit Inhaltsstoffen, die auf das Nahrungsmittel übertragbar sind. So sind in der WO 98/31731 und in der EP-A 986 957 Folien offenbart, die auf der dem Nahrungsmittel zugewandten Seite eine Schicht aufweist mit einer Geschmacks- oder Aromakomponente und einem Polysaccharid oder Protein als Bindemittel.

Die Hülle gemäß WO 98/31731 weist eine Trägerfolie aus einem thermoplastischen Polymer und eine Beschichtung auf. Die Beschichtung umfaßt ein Additiv, beispielsweise einen Geschmacks-, Aroma- oder Farbstoff, ein Bindemittel und einen Vernetzer mit mindestens 2 Carbonylgruppen. Das Bindemittel kann Hydroxypropylstärke oder Hydroxypropylmethylstärke sein, d.h. ein Stärkederivat. Die Beschichtung mit dem Stärkederivat als Bindemittel wird nicht durch (Co)Extrusion hergestellt, sondern - zusammen mit dem Additiv und dem Vernetzer - auf eine bereits existierende Folie aufgetragen. Gegebenenfalls wird auf die Folie vorher eine Grundierungsschicht (primer layer) aufgebracht. Die Trägerfolie kann insbesondere aus Polyolefin, Polyamid oder Polyester bestehen. Sie kann auch mehrschichtig sein und Barriereeigenschaften aufweisen. Offenbart sind auch nahtlose Schlauchfolien, die vor dem Beschichten aufgeschnitten werden und daher keine coextrudierten Folien ergeben.

In der JP-A 139401/2000 ist eine Folie beschrieben, mit der sich eine Nahrungsmittelfarbe auf Wurstbrät, Schinken oder ähnliche Lebensmittel übertragen läßt. Erreicht wird das mit einer Beschichtung, die neben dem Lebensmittelfarbstoff noch einen eßbaren Weichmacher, wie Glycerin, Sorbit oder Propylenglykol enthält.

In der DE-A 198 22 979 sind einschichtige Hüllen aus einem thermoplastische Stärke und ein Polyesterurethan enthaltenden Gemisch offenbart. Die Hülle ist räucherbar in dem Sinne, daß sie durchlässig für Rauchbestandteile ist.

Gegenstand der DE-A 198 46 305 ist eine Barrierehülle aus einem Kunststoffmaterial, die auf der Innenseite eine Lage aus einem saugfähigen Material (Gewebe, Gewirke oder Gestricke) aufweist, das mit Farb- oder Aromastoffen getränkt ist. Beim Kochen oder Brühen werden die Farb- oder Aromastoffe auf das von der Hülle umschlossene Lebensmittel übertragen. Die Verbindung der Innenlage mit der benachbarten Lage der Hülle erfolgt allgemein durch einen Kleber. Die Barrierehülle selbst besteht beispielsweise aus Polyamid- und Polyethylenschichten. Schlauchförmige Hülle werden allgemein aus entsprechenden Flachfolien durch Heißsiegeln oder Kleben hergestellt. Im Bereich der Siegelnaht wird der Farb- oder Aromastoff oftmals ungleichmäßig übertragen. Auch zeigen gesiegelte oder geklebte Hüllen häufig einen ungleichmäßigen Schrumpf. Dann zeigt sich nach dem Brühen oder Kochen der Wurst in den Nahtbereichen ein unerwünschter Geleeabsatz zwischen Hülle und Wurstbrät.

Bereits beschrieben sind auch schlauchförmige Nahrungsmittelhüllen auf Cellulosebasis, die auf der dem Lebensmittelmittel zugewandten Seite Rauch und/oder Gewürzen tragen. Diese Hüllen haben eine hohe Durchlässigkeit für Wasserdampf und Sauerstoff. Ein in der Hülle befindliches Nahrungsmittel trocknet daher relativ schnell aus und in nur kurze Zeit haltbar.

All die bekannten Hüllen mit einer Innenlage oder Innenbeschichtung, die einen übertragbaren Nahrungsmittelzusatzstoff enthält, zeigen jedoch allgemein den Nachteil, daß sich die Haftung der Schicht nicht in der gewünschten Weise einstellen läßt. Die Folge einer zu geringen Haftung ist, daß die Wurst zur Geleebildung neigt und daß die Beschichtung beim Konfektionieren (bei Schlauchfolien üblicherweise durch Raffen und/oder Wenden) Risse zeigt oder gar abplatzt. Die Hülle ist dann nicht mehr verwendbar. Bei einer zu starken Haftung wird Farb-, Aroma- oder Geschmacksstoff nicht in ausreichendem Maße auf das Lebensmittel übertragen.

Es bestand daher die Aufgabe, eine nahtlose, schlauchförmige Lebensmittelhülle zur Verfügung zu stellen, die gute Barriereeigenschaften aufweist, inbesondere eine hohe Barriere für Sauerstoff und Wasserdampf, und mit der sich Farb -, Aroma- oder Geschmacksstoffe gleichmäßig auf ein mit der Hülle in Kontakt befindliches Lebensmittel übertragen lassen. Die Hülle soll sich einfach und kostengünstig herstellen lassen, möglichst ohne Kleben oder Laminieren. Beim Kochen oder Brühen der Würste soll sich kein Geleeabsatz bilden.

Gelöst wurde die Aufgabe mit einer mehrschichtigen Hülle, deren Innenschicht thermoplastische Stärke oder ein thermoplastisches Stärkederivat enthält, abgemischt mit mindestens einem anderen thermoplastischen Polymer. Die Innenschicht haftet sehr gut an der benachbarten Schicht der Hülle, sie saugt die Farb-, Aroma- oder Geschmacksstoffe intensiv auf und gibt sie später an das Nahrungsmittel ab. Die Hülle soll insbesondere für die Herstellung von Koch- und Brühwürsten wie auch von Rohwürsten, verwendbar sein.

Gegenstand der vorliegenden Anmeldung ist demgemäß eine nahtlose, schlauchförmige Nahrungsmittelhülle mit einer Schicht, die ein Gemisch aus a) thermoplastischer Stärke und/oder einem thermoplastischen Stärkederivat und b) mindestens einem weiteren Polymer umfaßt, dadurch gekennzeichnet, daß das weitere Polymer ein Homo- oder Copolymer mit Hydroxycarbonsäure-Einheiten, ein Polyesterurethan, ein Polyetherurethan, ein Polyesteretherurethan oder ein Polyalkylencarbonat der Formel $-[CHR^1-CHR^2-O-CO-O-]_n$ ist, wobei $R^1$ und $R^2$ unabhängig voneinander für ein Wasserstoffatom oder einen $(C_1-C_4)$Alkylrest stehen und n für eine ganze Zahl von 10 bis 5.000 steht, daß die Hülle durch Coextrusion hergestellt und mehrschichtig ist, wobei die Schicht aus dem Gemisch die innenliegende Schicht bildet und die weitere(n) Schicht(en) Barriereschichten sind, und daß die Hülle innen mindestens einen übertragbaren Farb-, Aroma- und/oder Geschmacksstoff trägt.

Die Hülle ist mehrschichtig. Die weitere(n) Schicht(en) sind allgemein sogenannte Barriereschichten, die für Gas und Wasserdampf weniger durchlässig sind als die Stärke oder Stärkederivate enthaltende Schicht. Sie verlangsamen das Austrocknen des Lebensmittels während der Lagerung und verhindern den Zutritt von Luftsauerstoff. Diese Aufgabe können Schichten auf Basis von Polyamid, Polyolefin, Polyester, Polyvinylidenchlorid (PVDC), Polyvinylchlorid (PVC), Polystyrol oder von entsprechenden Copolymeren erfüllen. Schichten auf Basis von Polyamid oder Polyolefin sind allgemein bevorzugt. Die Polyamidschichten können aliphatisches Polyamid, aliphatisches Copolyamid oder einer Mischung daraus enthalten. Beispiele dafür sind Polycaprolactam (PA 6), Polyhexamethylenadipamid (PA 66) und ein Copolyamid aus Caprolactam-, Hexamethylendiamin- und Adipinsäure-Einheiten (PA 6/66). Zusätzlich können die Polyamidschichten teil- oder vollaromatische Polyamide enthalten, beispielsweise ein Copolyamid aus Hexamethylendiamin, Terephthalsäure und Isophthalsäure (PA 6I/6T). Der Anteil der (teil-)aromatischen Polyamide beträgt allgemein nicht mehr als 40 Gew.-%, bezogen auf das Gesamtgewicht der Polyamidschicht. Darüber hinaus können die Polyamidschichten auch noch andere Polymere enthalten, beispielsweise Polyolefine, Polyester oder Ionomere. Der Anteil der anderen Polymere beträgt vorzugsweise nicht mehr als 25 Gew.-%, bezogen auf das Gesamtgewicht der betreffenden Polyamidschicht.

Die Polyolefinschichten bestehen allgemein aus Polyethylen, Polypropylen oder aus Copolymeren mit Einheiten aus Polyethylen, Polypropylen und/oder $\alpha$-Olefinen mit 4 bis 8 C-Atomen. Geeignet sind insbesondere $C_2/C_3$- und $C_3/C_4$-Copolymere, $C_2/C_3/C_4$-Terpolymere und Mischungen daraus.

Zu berücksichtigen ist, daß Polyamidschichten eine hohe Sauerstoffbarriere zeigen, jedoch nur eine relativ geringe Wasserdampfbarriere. Bei Polyolefinschichten verhält es sich genau umgekehrt. Wenn eine besonders Barrierewirkung erzielt werden soll, ist daher zweckmäßig, gleichzeitig mindestens eine Polyamid- und mindestens eine Polyolefinschicht vorzusehen. Zwischen den Barriereschichten befinden sich zweckmäßig noch relativ dünne (0,5 bis 5 μm nach dem Verstrecken) Haftschichten. Sie bestehen aus oder enthalten einen Haftvermittler. Geeignete Haftvermittler sind insbesondere Pfropfpolymere oder Copolymere (wobei der Begriff "Copolymere" auch Polymere mit mehr als 2 verschiedenen Monomereinheiten umfassen soll) mit Ethylen- und/oder Propylen-Einheiten und Einheiten aus wenigstens einem Comonomer aus der Gruppe bestehend aus (Meth)acrylsäure, (Meth)acrylsäureester, Vinylacetat und Maleinsäureanhydrid . Bevorzugte Comonomere sind insbesondere $(C_1-C_6)$Alkyl-(meth)acrylate, wie Butylacrylat Auch gummimodifiziertes Polyethylen ist geeignet. Der Anteil der Einheiten mit funktionellen Gruppen in den Pfropf oder Copolymeren beträgt allgemein 3 bis 12 Gew.%, bezogen auf das Gewicht der haftungsvermittelnden Komponente. Die Begriffe "(Meth)acrylsäure" und "-(meth)acrylat" stehen stehen dabei für Acrylsäure und/oder Methacrylsäure bzw. -acrylat und/oder -methacrylat.

Besonders bevorzugt sind Hüllen, die - vor dem Wenden - folgenden Aufbau haben ("Stärke" kann dabei auch "Stärkederivat" meinen):

*außen*          *innen*

(Stärke + weiteres Polymer)/(Polyolefin + Haftvermittler)/Polyamid

3

(Stärke + weit. Polym.)/Haftschicht/Polyolefin/Haftschicht/Polyamid

(Stärke+weit.Polym.)/Haftsch./Polyamid/Haftsch./Polyolefin/Haftsch./Polyamid

(Stärke+weit.Polym.)/Haftsch./EVOH/Haftsch./Polyolefin/Haftsch./Polyamid

(Stärke+weit.Polym.)/Polyamid/Haftschicht/Polyolefin/Haftschicht/Polyamid

(Stärke+weit.Polym.)/Polyamid/(Polyolefin+Haftvermittler)/Polyamid

(Stärke+weit. Polym.)/EVOH/(Polyolefin + Haftvermittler)/Polyamid

Eine Haftschicht kann dementsprechend auch zwischen der Stärke oder Stärkederivate enthaltenden Schicht und einer weiteren Schicht der mehrschichtigen Hülle angeordnet sein. Ob eine solche Zwischenschicht zweckmäßig ist, hängt dabei ebenso von Art und Anteil der weiteren Polymere in der stärke- oder stärkederivathaltigen Schicht ab wie auch von der Art der angrenzenden Schicht. Einzelne Haftschichten können auch wegfallen, wenn die darin enthaltenen haftvermittelnden Komponenten mit den Komponenten einer angrenzenden Schicht vermischt sind. So hat es sich als günstig erwiesen, Haftvermittler in die Polyolefinschicht einzuarbeiten, gegebenenfalls auch in eine Polyamidschicht. Das ergibt insgesamt einen einfacheren Aufbau mit einer geringeren Anzahl an Schichten.

Die erfindungsgemäße Nahrungsmittelhülle kann mit einem Flächenverhältnis von 1:2 bis 1:10 verstreckt sein, was vorzugsweise durch Blasverformen erreicht wird. Das gilt für die ein- wie auch für die mehrschichtige Ausführungsform. Die Dicke der verstreckten Folie (ohne die Beschichtung) beträgt allgemein 30 bis 120 $\mu$m, bevorzugt 40 bis 90 $\mu$m. Vorzugsweise ist die Folie jedoch unverstreckt.

Das Gewichtsverhältnis von thermoplastischer Stärke und/oder thermoplastischem Stärkederivat zu dem mindestens einen anderen, durch Polykondensation oder Polyaddition erhältlichen Polymer beträgt zweckmäßig etwa 90 : 10 bis 10 : 90, bevorzugt 20 : 80 bis 80 : 20, besonders bevorzugt 20 : 80 bis 40 : 60.

Das thermoplastische Stärkederivat ist vorzugsweise ein Stärkeester, wie er in der DE-A 195 15 477 ausführlich beschrieben ist. Die Säurekomponente in dem Ester ist allgemein eine $(C_2-C_{10})$Alkansäure, die vorzugsweise nicht oder nur wenig verzweigt ist. Ein besonders bevorzugtes und kostengünstiges Stärkealkanoat ist Stärkeacetat, insbesondere solches mit einem Substitutionsgrad von weniger als 3, speziell von 1,5 bis 2,4. Anders als die Stärke selbst sind Stärkeester, wie das Stärkeacetat, bereits als solche thermoplastisch und müssen nicht erst plastifiziert werden. Stärkeester mit einer längeren Alkylkette, beispielsweise Stärkehexanoate, -octanoate oder -decanoate, bewirken eine Veränderung der Geschmeidigkeit und Zähigkeit wie auch der Permeation der Nahrungsmittelhüllen. Durch Kombinieren verschiedener Stärkeester lassen sich Hüllen mit ganz speziellen Eigenschaften herstellen. Auch thermoplastische Stärkederivate, die kationische quarternäre Seitengruppen mit hydrophoben $(C_2-C_{18})$Alkylgruppen, vorzugsweise $(C_2-C_{12})$Alkylgruppen, aufweisen, sind geeignet. Um die Eigenschaften der Hülle noch weiter zu modifizieren, können auch noch Fasern oder Füllstoffe in der Stärke oder Stärkederivate enthaltenden Schicht eingearbeitet werden.

Es hat sich gezeigt, daß Nahrungsmittelhüllen, die allein aus thermoplastischer Stärke und/oder thermoplastischen Stärkederivaten bestehen, noch nicht das gewünschte Maß an Dehnbarkeit, Festigkeit, Zähigkeit, Geschmeidigkeit, vor allem aber an Stabilität gegenüber heißem oder kochendem Wasser aufweisen. Erreicht werden diese Eigenschaften erst, wenn die thermoplastische Stärke bzw. das Stärkederivat mit anderen, durch Polykondensation oder Polyaddition erhältlichen Polymeren abgemischt ist.

Das durch Polykondensation erhältliche Polymer ist vorzugsweise ein Homo-oder Copolymer mit Hydroxycarbonsäure-Einheiten. Besonders bevorzugt ist es ein Polylactid, Poly(3-hydroxy-propionsäure), Poly(3-hydroxy-buttersäure), Poly-(4-hydroxy-buttersäure), Polycaprolacton, Polyether-urethane und Polyesterether-urethane, Polyalkylencarbonate der Formel $-[CHR^1-CHR^2-O-CO-O-]_n$, wobei $R^1$ und $R^2$ unabhängig voneinander für ein Wasserstoffatom oder einen $(C_1-C_4)$Alkylrest stehen und n eine ganze Zahl von 10 bis 5.000 ist. Besonders geeignete Polyalkylencarbonate sind Polyethylencarbonat ($R^1 = R^2 = H$) und Polypropylencarbonat sowie Gemische davon. Die Polyalkylencarbonate sind beispielsweise in der WO 96/35746 beschrieben. Ein bevorzugtes Polymer, das durch Polyaddition erhältlich ist, stellt Polyvinylacetat dar. Die Polykondensations- oder Polyadditionsprodukte lassen sich nach bekannten Verfahren synthetisch herstellen. Sie sind üblicherweise nicht oder nur sehr gering vernetzt. Ihr mittleres Molekulargewicht $M_w$ beträgt allgemein 20.000 bis 2.000.000, bevorzugt 100.000 bis 1.000.000. Es wird angenommen, daß die Polykondensate eine Art von Matrix bilden, in der sich die thermoplastische und damit destrukturierte Stärke bzw. das Stärkederivat gleichmäßig verteilt.

In einer besonders bevorzugten Ausführungsform ist das weitere Polymer ein thermoplastisches Polyesterurethan, wie es in der DE-A 198 22 979 beschrieben ist. Das thermoplastische Polyesterurethan besteht allgemein aus harten Polyurethan- und weichen Polyester-Segmenten, wobei die Segmente in alternierender Folge angeordnet sind. Als "weich" werden dabei Segmente mit einer Glas-Übergangstemperatur ($T_g$) von - 20 °C oder darunter bezeichnet, als "hart" dagegen solche mit einer $T_g$ von + 30 °C oder darüber. Das Polyesterurethan kann aliphatischer oder aromatischer Natur sein. Der Anteil der Polyurethansegmente in dem thermoplastischen Polyesterurethan beträgt dabei 10 bis 90 Gew.-%, bevorzugt 20 bis 50 Gew.-%, jeweils bezogen auf das Gesamtgewicht des Polyesterurethans. Sie bestehen allgemein aus Diisocyanat- und Diol-Einheiten. Die Düsöcyanat-Einheiten können dabei aliphatisch, cycloaliphatisch oder aromatisch sein. Beispiele für aliphatische Diisocyanate sind Butan-1,4-diisocyanat und Hexan-1,6-diisocyanat. Isophoron-düsocyanat (= 3-Isocyanatomethyl-3,5,5-trimethyl-cyclohexan-isocyanat) repräsentiert ein cycloaliphatisches Diisocyanat. Toluol-2,4- und -2,6-diisocyanat, Diphenylmethan-2,2'-, -2,4'-, -2,6'- und -4,4'-diisocyanat sowie Naphthalin-1,5-diisocyanat sind bevorzugte aromatische Diisocyanate.

Die Polyestersegmente haben in der Regel eine mittlere Molmasse $M_w$ von 500 bis 10.000 g/mol, bevorzugt 1.000 bis 4.000 g/mol. Sie bestehen bevorzugt aus Einheiten von zwei- oder mehrwertigen Alkoholen und Einheiten von zwei- oder mehrwertigen Carbonsäuren. Sie lassen sich aus den genannten Ausgangsstoffen durch Kondensationspolymerisation in Gegenwart von Katalysatoren, wie Titanbutylat (= Orthotitansäure-tetrabutylester) herstellen. Gewöhnlich bestehen die Polyestersegmente jedoch aus Diol- und Dicarbonsäure-Einheiten. In die Kondensationsreaktion können anstelle der freien Säuren naturgemäß auch entsprechende Säurederivate, wie Carbonylhalogenide (insbesondere Carbonylchloride), Carbonsäureanhydride oder Carbonsäure-($C_1$-$C_4$)alkylester eingesetzt werden. Die Diole oder Polyole haben allgemein ein aliphatisches oder cycloaliphatisches Grundgerüst. Bevorzugte Diole zur Herstellung der Estersegmente sind Ethan-1,2-diol (= Ethylenglykol), Propan-1,2- und -1,3-diol, 2,2-Dimethyl-propan-1,3-diol (= Neopentylglykol), Butan-1,4-diol, Pentan-1,5-diol, Hexan-1,6-diol und Cyclohexandiyl-bismethanol (insbesondere Cyclohexan-1,4-diyl-bismethanol). Es können auch Gemische von mehreren verschiedenen Diolen oder Polyolen eingesetzt werden. Die Di- oder Polycarbonsäuren haben bevorzugt ebenfalls ein aliphatisches oder cycloaliphatisches Grundgerüst, wobei aliphatische Dicarbonsäuren (wie Bernsteinsäure oder Adipinsäure) bevorzugt sind. Besonders bevorzugt ist Adipinsäure. Eine Dicarbonsäure mit einem cycloaliphatischen Grundgerüst ist beispielsweise Cyclohexandicarbonsäure (insbesondere Cyclohexan-1,4-dicarbonsäure). Die Polyestersegmente können auch aus Einheiten von Hydroxycarbonsäuren oder deren Derivaten aufgebaut sein, beispielsweise aus 3-Hydroxy-propionsäure, 3-Hydroxy-buttersäure, 4-Hydroxy-buttersäure, 5-Hydroxy-pentansäure oder ε-Caprolacton. Besonders geeignet sind Polyesterurethane, die bei einer Temperatur von 190 °C und einer Belastung von 21,6 kg einen Volumenschmelzindex MVI (bestimmt gemäß ISO 01133) im Bereich von etwa 5 bis 15 $cm^3$/10 min aufweisen.

Die Stärke oder Stärkederivate enthaltende Schicht kann zusätzlich noch weitere nieder- oder hochmolekulare Bestandteile enthalten, die insbesondere als Weichmacher oder Gleitmittel dienen oder die Verträglichkeit der Komponenten miteinander verbessern. Durch die weiteren Bestandteile kann die Homogenität oder Fließfähigkeit des extrudierbaren thermoplastischen Gemisches gegebenenfalls noch weiter verbessert werden. Als Weichmacher eignen sich besonders Glycerin, Diglycerin, Sorbit, Polyethylenglykol (PEG), Citronensäuretriethylester, Acetyl-citronensäuretriethylester, Glycerintriacetat, Phthalsäureester (speziell Dimethylphthalat, Diethylphthalat und Dibutylphthalat) sowie Sorbitmono- oder -diester. Der Anteil an Weichmacher(n) beträgt bis zu 30 Gew.-%, bevorzugt bis zu 15 Gew.-%, jeweils bezogen auf das Gesamtgewicht der Schicht. Gleitmittel, die die Homogenität des thermoplastischen Gemisches verbessern, sind insbesondere pflanzliche Fette oder Öle, synthetische Triglyceride, Lecithine, ethoxylierte Fettalkohole oder Wachse. Der Anteil der Gleitmittel beträgt bis zu 12 Gew.-%, bevorzugt 2 bis 6 Gew.-%, besonders bevorzugt 3 bis 6 Gew.-%, jeweils bezogen auf das Gesamtgewicht der Schicht.

Für Hüllen mit einer besonders hohen Stabilität gegenüber heißem oder kochendem Wasser hat es sich als günstig erwiesen, dem thermoplastischen Gemisch noch Vernetzungsmittel hinzuzufügen. Geeignete Vernetzungsmittel sind beispielsweise Dicarbonsäuren, Di- oder Triisocyanate (besonders Hexamethylendiisocyanat), Dialdehyde (besonders Glyoxal), Diepoxide, Diimine oder Silane bzw. Siloxane mit Vinylgruppe(n), beispielsweise Vinyl-trimethyl-silan. Der Vernetzer wird vorzugsweise erst dann zugesetzt, wenn die übrigen Komponenten des Gemisches bereits aufgeschmolzen sind. Der Anteil an Vernetzer(n) beträgt bis zu 20 Gew.-%, vorzugsweise 0,5 bis 10 Gew.-%, besonders bevorzugt 1 bis 5 Gew.-%, jeweils bezogen auf das Gesamtgewicht des thermoplastischen Gemisches.

Die Herstellung von thermoplastisch verarbeitbarer Stärke ist bekannt und in den WO 90/05161 und 90/10019 beschrieben. Bei der Plastifizierung wird die Helixstruktur der nativen Stärke aufgehoben. Die Stärke liegt danach in amorphem Zustand vor. Die Plastifizierung erfolgt allgemein durch Erhitzen und Zuführen mechanischer Energie, beispielsweise durch längere thermische Behandlung in einem Kneter oder einem Ein- bzw. Zweischneckenextruder. Damit die Stärke unterhalb ihrer Zersetzungstemperatur schmilzt, sind Zusätze notwendig, wie Wasser, 1,3-Butandiol, Glycerin, Diglycerin, N,N-Dimethyl-harnstoff, Sorbit oder Citrat. Beim Plastifizieren mit Wasser werden etwa 20 bis 25 Gew.-% Wasser, vorzugsweise etwa 17 Gew,-% Wasser hinzugefügt, jeweils bezogen auf das Gewicht der nativen Stärke. Dabei wird eine Temperatur von etwa 100 bis 190°C eingehalten. Beim Plastifizieren mit Glycerin haben sich ein Anteil von 0,5 bis 20 Gew.-%, vorzugsweise 8 bis 16 Gew.-%, wiederum jeweils bezogen auf das Gewicht der nativen Stärke, und eine Temperatur von 150 bis 210 °C als günstig erwiesen. Durch diese Behandlung wird der Anteil der kristallinen Stärke auf 5 Gew.-% oder noch darunter gesenkt.

Das thermoplastische Gemisch läßt sich in üblichen Apparaturen, beispielsweise in einem Zweischneckenkneter, aus den genannten Komponenten herstellen. Zur Bildung einer homogenen, thermoplastischen Schmelze aus dem Gemisch hat sich eine Temperatur von 90 bis 200 °C, bevorzugt von 120 bis 180 °C, als günstig erwiesen. Die Schmelze kann extrudiert, nach dem Abkühlen zerkleinert und als Granulat oder in ähnlicher Form zwischengelagert, ebenso gut auch direkt zu einer Nahrungsmittelhülle verarbeitet werden. Der aus der beschriebenen Schmelze hergestellte Schlauch wird dann im Blasformverfahren mit Luft aufgeblasen und dabei längs und quer verstreckt in einem Flächenverhältnis von 1:2 bis 1:10, bevorzugt 1:3 bis 1:5. Erst durch die Verstreckung erhalten die Schläuche die optimale Festigkeit, Dehnung, Kaliberhaltung und Schrumpf. Wie stark ausgeprägt jede dieser Eigenschaften ist, hängt primär von der Zusammensetzung des thermoplastischen Gemisches ab. So lassen sich die Nahrungsmittelhüllen durch gezielte Auswahl der Komponenten des thermoplastischen Gemisches, der Verstreckungsbedingungen und der Art der Nachbehandlung den unterschiedlichsten Anforderungen anpassen. Gegebenenfalls können die blasverformten Hüllen auch noch teilweise thermofixiert werden.

Mehrschichtige schlauchförmige Hüllen lassen sich durch Coextrusion mit Hilfe geeigneter Ringdüsen oder nach anderen, dem Fachmann allgemein bekannten Verfahren herstellen.

In einem weiteren Verfahrensschritt werden die Farb-, Aroma- und/oder Geschmacksstoffe auf die schlauchförmige Hülle aufgebracht. Dazu stehen wiederum eine Reihe von Verfahren zur Verfügung, beispielsweise Besprühen, Bedrucken, Walzenantrag, Beflocken, Kalandrieren oder Lackieren. Es können auch mehrere der Verfahren kombiniert werden. Dabei hat es sich als besonders zweckmäßig erwiesen, die mehrschichtige schlauchförmige Hülle zunächst so herzustellen, daß die mit der thermoplastischen Stärke oder dem thermoplastischen Stärkederivat hergestellte Schicht außen liegt. Dann wird der Farb-, Aroma- und/oder Geschmacksstoff auf diese Schicht aufgebracht. Anschließend wird die Hülle dann gewendet, so daß die ursprünglich außenliegende Schicht nun die Innenschicht bildet. Auch auf die einschichtige Hülle kann der Farb-, Aroma- oder Geschmacksstoff in praktisch gleicher Weise aufgebracht werden. Verfahren und Vorrichtungen zum Wenden von Wursthüllen sind dem Fachmann allgemein bekannt. Diese Vorgehensweise ist besonders günstig, weil das Aufbringen von Zusatzstoffen auf die Außenseite verfahrenstechnisch wesentlich einfacher und kostengünstiger ist. Die gewendete Hülle dann in ebenfalls bekannter Weise abschnittweise gerafft werden. Die erfindungsgemäße Hülle hat den überraschenden Vorteil, daß die Beschichtung auf der Stärke oder Stärkederivat enthaltenden Schicht wesentlich besser ist als auf einer Schicht aus anderem Material, wie einer Polyamid oder Polyolefinschicht. Erst dadurch ist es möglich, die Hülle zu wenden ohne dabei die Beschichtung zu beeinträchtigen.

Der Farb-, Aroma- oder Geschmacksstoff ist beispielsweise ein Gewürz oder eine Gewürzmischung (z.B. Pfeffer in ganzen Körnern oder gemahlen), ein Gewürzextrakt, Flüssig- oder Trockenrauch, der auch modifiziert sein kann (beispielsweise durch Zusatz von alkalisch wirkenden Mitteln und/oder von viskositätssteigemden Mitteln oder durch Entzug von Teerbestandteilen), ein natürliches oder synthetisches Aroma, ein Geschmacksverstärker (z.B. Glutamin) oder ein anderer Lebensmittelzusatzstoff. Flüssigrauch beispielsweise zieht in die Stärke oder Stärkederivat enthaltende Schicht ein. Feste Stoffe sind dagegen in der Regel an der Oberfläche der Schicht gebunden, zweckmäßig mit Hilfe von Bindemitteln.

Dementsprechend ist in einer bevorzugten Ausführungsform der Farb-, Aroma- oder Geschmacksstoff kombiniert mit einem lebensmittelrechtlich zugelassenen Bindemittel, insbesondere einem Polysaccharid (wie Stärke), einer modifizierten Stärke (wie Carboxymethylstärke), Dextran, Pullulan, Traganthgummi, Xanthangummi, Gummi arabicum, Alginat, Methylcellulose, Hydroxyethylcellulose, Hydroxypropylcellulose, Carboxymethylcellulose, Chitin, Chitosan Pektin, Carrageenan, Guar einem Protein wie Gluten oder Gelatine. Art und Anteil des Bindemittels oder Bindemittelgemisches richten sich nach dem Farb-, Aroma- oder Geschmacksstoff und lassen sich in einfachen Vorversuchen optimieren. Das Bindemittel kann mit dem Farb-, Aroma- oder Geschmacksstoff vermischt sein. In manchen Fällen, beispielsweise wenn ganze Pfefferkörner oder grob gemahlener Pfeffer übertragen werden soll, ist es zweckmäßig, zunächst eine Schicht aus dem Bindemittel vorzusehen und darauf dann die Farb-, Aroma- oder Geschmacksstoffe allein oder vermischt mit weiterem Bindemittel aufzubringen. Die Dicke der Bindemittelschicht richtet sich nach der Art der zu übertragenden Komponente.

Um einen gleichmäßigen Transfer der Farb-, Aroma- oder Geschmacksstoffe beim Kochen oder Brühen des Nahrungsmittels zu erreichen, hat es sich zudem als besonders günstig erwiesen, dem Farb-, Aroma- oder Geschmacksstoff und/oder dem Bindemittel eine Komponente hinzuzufügen, die die Wasserlöslichkeit vermindert. Für diesen Zweck ist Schellack, speziell Blätterschellack, besonders geeignet.

Die erfindungsgemäße Nahrungsmittelhülle eignet sich besonders für die Herstellung von Koch- oder Brühwurst, aber auch für (Koch-)schinken, Pökelware und sogar für Schmelzkäse. Das Nahrungsmittel wird durch die von der Hülle übertragenen Bestandteile in Aussehen, Geruch oder Geschmack modifiziert. Insbesondere kann die Hülle dem Lebensmittel Räucherfarbe und - aroma verleihen.

Im folgenden Beispiel sind Prozente als Gewichtsprozente zu verstehen, soweit nicht anders angegeben.

*a) Herstellung thermoplastischer Stärke*

100 kg Kartoffelstärke wurden unter vermindertem Druck auf einen Wassergehalt von weniger als 0,3 % im Vakuum getrocknet und mit 50 kg Glycerin (99%ig) in einem Kneter bei 160 bis 190 °C geschmolzen und gut durchmischt. Zur Aufhebung der Helixstruktur der Stärke wurde die Schmelze für etwa 2 h bei 170 °C gehalten. Sie wurde dann extrudiert und granuliert. Beim anschließenden Lagern des Granulats blieb die Stärke im amorphen und damit thermoplastischen Zustand.

*b) Herstellung einer nahtlosen, mehrschichtigen Nahrungsmittelhülle*

75 kg des unter a) beschriebenen Granulats (50 kg Stärke + 25 kg Glycerin) wurden mit 50 kg Polycaprolacton, 3 kg Sonnenblumenöl und 3 kg Hexamethylendiisocyanat gemischt. Die gleichmäßig miteinander vermischten Komponenten wurden in einem Extruder bei 150 °C geschmolzen.

In jeweils einem weiteren Einschnecken-Extruder wurde a) ein Gemisch aus 70 % aliphatischem Polyamid (®Grilon F40) und 30 % teilaromatischem Polyamid mit Einheiten aus Hexamethylendiamin, Isophthalsäure und Terephthalsäure (PA 6I/6T; ®Grivory G21) und b) ein Gemisch aus 80 % LLDPE und 20 % Haftvermittler (Ethylen/Methacrylsäure-Copolymer) aufgeschmolzen.

Anschließend wurde die einzelnen Schmelzen in einer Coextrusions-Ringdüse zusammengeführt und coextrudiert. Der Durchmesser der Ringdüse war so gewählt, daß nach dem Blasverformen im Flächenverhältnis 1 : 8,5 ein Schlauch mit einem Durchmesser von 60 mm (= Kaliber 60) und einer Wanddicke von 80 $\mu$m erhalten wurde. In diesem Schlauch bildete die stärkehaltige Schicht die Außenschicht (Dicke: 20 $\mu$m), die polyolefinische Schicht die zentrale Schicht (Dicke: 25 $\mu$m) und die Polyamidschicht die Innenschicht (Dicke: 35 $\mu$m).

Auf der Außenseite der Hülle wurde dann mit einem Rakel ein Gemisch aus

| | |
|---|---|
| 79,8 % | Ethanol, |
| 2,6 % | Schellack, |
| 3,0 % | Polyvinylpyrrolidon, |
| 8,0 % | eines alkalisch gestellten Flüssigrauchs von Zesti Smoke, |
| 1,6 % | einer braunen Lebensmittelfarbe (Eurolake Brown HT), |
| 1,0 % | Alginat (®Protanal XLRB von Protan AS, Norwegen) und |
| 0,2 % | Citral |

angetragen und getrocknet. Die Hülle wurde dann gewendet und abschnittweise zu Raupen gerafft.

Auf einer automatischen Füll- und Portionieranlage wurde die Hülle dann mit Brühwurstbrät gefüllt. Beim anschließenden Brühen der Wurst wurde die Rauchfarbe gleichmäßig und fleckenfrei auf das Brät übertragen.

**Patentansprüche**

1. Nahtlose, schlauchförmige Nahrungsmittelhülle mit einer Schicht, die ein Gemisch aus a) thermoplastischer Stärke und/oder einem thermoplastischen Stärkederivat und b) mindestens einem weiteren Polymer umfaßt, **dadurch gekennzeichnet, daß** das weitere Polymer ein Homo- oder Copolymer mit Hydroxycarbonsäure-Einheiten, ein Polyesterurethan, ein Polyetherurethan, ein Polyesteretherurethan oder ein Polyalkylencarbonat der Formel -[CHR$^1$-CHR$^2$-O-CO-O-]$_n$ ist, wobei R$^1$ und R$^2$ unabhängig voneinander für ein Wasserstoffatom oder einen (C$_1$-C$_4$) Alkylrest stehen und n für eine ganze Zahl von 10 bis 5.000 steht, daß die Hülle durch Coextrusion hergestellt und mehrschichtig ist, wobei die Schicht aus dem Gemisch die innenliegende Schicht bildet und die weitere(n) Schicht (en) Barriereschichten sind, und daß die Hülle innen mindestens einen übertragbaren Farb-, Aroma- und/oder Geschmacksstoff trägt.

2. Nahrungsmittelhülle gemäß Anspruch 1, **dadurch gekennzeichnet, daß** das Gewichtsverhältnis von thermoplastischer Stärke und/oder thermoplastischem Stärkederivat zu dem weiteren Polymer 90:10 bis 10:90, bevorzugt 20 : 80 bis 80 : 20, besonders bevorzugt 20 : 80 bis 40 : 60, beträgt.

3. Nahrungsmittelhülle gemäß Anspruch 1, **dadurch gekennzeichnet, daß** das thermoplastische Stärkederivat ein Stärkeester, bevorzugt ein Stärkealkanoat, besonders bevorzugt Stärkeacetat, ist.

4. Nahrungsmittelhülle gemäß Anspruch 1 oder 2, **dadurch gekennzeichnet, daß** das Polymer b) bevorzugt ein Polylactid, eine Poly(3-hydroxy-propionsäure), eine Poly(3-hydroxy-buttersäure), eine Poly(4-hydroxy-buttersäure) oder Polycaprolacton ist.

5. Nahrungsmittelhülle gemäß Anspruch 1, **dadurch gekennzeichnet, daß** eine Schicht auf Basis von Polyamid, Polyolefin, Polyester, Polyvinylidenchlorid (PVDC), Polyvinylchlorid (PVC), Polystyrol oder von entsprechenden Copolymeren ist.

6. Nahrungsmittelhülle gemäß Anspruch 5, **dadurch gekennzeichnet, daß** sie mindestens eine Polyamid- und mindestens eine Polyolefinschicht aufweist.

7. Nahrungsmittelhülle gemäß Anspruch 1, **dadurch gekennzeichnet, daß** der Farb-, Aroma- und/oder Geschmacksstoff ein Gewürz oder eine Gewürzmischung, ein Gewürzextrakt, ein Flüssig- oder Trockenrauch, ein natürliches oder synthetisches Aroma und/oder ein Geschmacksverstärker ist.

8. Nahrungsmittelhülle gemäß Anspruch 7, **dadurch gekennzeichnet, daß** der Farb-, Aroma- oder Geschmacksstoff mit einem lebensmittelrechtlich zugelassenen Bindemittel kombiniert ist.

9. Nahrungsmittelhülle gemäß Anspruch 8, **dadurch gekennzeichnet, daß** das Bindemittel ein Polysaccharid wie Stärke, eine modifizierte Stärke wie Carboxymethylstärke, Dextran, Pullulan, Traganthgummi, Xanthangummi, Gummi arabicum, Alginat, Methylcellulose, Hydroxyethylcellulose, Hydroxypropylcellulose, Carboxymethylcellulose, Chitin, Chitosan, Pektin, Carrageenan, Guar, oder ein Protein wie Gluten oder Gelatine ist.

10. Nahrungsmittelhülle gemäß einem oder mehreren der Ansprüche 1 bis 9, **dadurch gekennzeichnet, daß** dem Farb-, Aroma- oder Geschmacksstoff und/oder dem Bindemittel eine Komponente hinzugefügt ist, die die Wasserlöslichkeit vermindert.

11. Nahrungsmittelhülle gemäß Anspruch 10, **dadurch gekennzeichnet, daß** die Komponente, die die Wasserlöslichkeit vermindert, Schellack ist.

12. Verfahren zur Herstellung der Nahrungsmittelhülle gemäß einem oder mehreren der Ansprüche 1 bis 11 mit den Schritten

    1) Zurverfügungstellen einer mehrschichtigen Hülle mit einer außenliegenden Schicht, die ein Gemisch enthält aus a) thermoplastischer Stärke und/oder einem thermoplastischem Stärkederivat und b) mindestens einem weiteren Polymer, und mindestens einer Barriereschicht,
    2) Aufbringen eines Farb-, Aroma- und/oder Geschmacksstoffs auf die Außenseite der Hülle und
    3) Wenden der Hülle, so daß die Außenseite nach innen gelangt.

13. Verfahren gemäß Anspruch 12, **dadurch gekennzeichnet, daß** der Farb-, Aroma- und/oder Geschmacksstoff durch Besprühen, Bedrucken, Walzenantrag, Beflocken, Kalandrieren und/oder Lackieren aufgebracht wird.

14. Verwendung der Nahrungsmittelhülle gemäß einem oder mehreren der Ansprüche 1 bis 11 zur Umhüllung von Koch- oder Brühwurst, (Koch)-schinken, Pökelware oder Schmelzkäse.

**Claims**

1. A seamless, tubular food casing having a layer comprising a mixture of a) thermoplastic starch and/or a thermoplastic starch derivative and b) at least one further polymer, **characterized in that** the further polymer is a homopolymer or copolymer containing hydroxycarboxylic acid units, a poly(ester urethane), a poly(ether urethane), a poly(ester ether urethane) or a poly(alkylene carbonate) of the formula $-[CHR^1-CHR^2-O-CO-O-]_n$, where $R^1$ and $R^2$ independ-

ently of one another are a hydrogen atom or a $(C_1-C_4)$alkyl group and n is an integer from 10 to 5000, **in that** the casing produced by coextrusion is multilayered, where the layer made of the mixture forms the inside layer, and the further layer/s is/are barrier layer/s and **in that** the casing carries internally at least one transferable coloring, aroma substance and/or flavoring.

2. The food casing as claimed in claim 1, wherein the weight ratio of thermoplastic starch and/or thermoplastic starch derivative to the further polymer is from 90:10 to 10:90, preferably from 20:80 to 80:20, particularly preferably from 20:80 to 40:60.

3. The food casing as claimed in claim 1, wherein the thermoplastic starch derivative is a starch ester, preferably a starch alkanoate, particularly preferably starch acetate.

4. The food casing as claimed in claim 1 or 2, wherein the polymer b) is preferably a polylactide, a poly(3-hydroxypropionic acid), a poly(3-hydroxybutyric acid), a poly(4-hydroxybutyric acid) or polycaprolactone.

5. The food casing as claimed in claim 1, wherein one layer is based on polyamide, polyolefin, polyester, poly(vinylidene chloride) (PVDC), poly(vinyl chloride) (PVC), polystyrene or on corresponding copolymers.

6. The food casing as claimed in claim 5, wherein at least one polyamide layer and at least one polyolefin layer is present.

7. The food casing as claimed in claim 1, wherein the coloring, aroma substance and/or flavoring is a spice or a spice mixture, a spice extract, a liquid smoke or dry smoke, a natural or synthetic aroma and/or a flavor enhancer.

8. The food casing as claimed in claim 7, wherein the coloring, aroma substance or flavoring is combined with a binder permitted by law for food use.

9. The food casing as claimed in claim 8, wherein the binder is a polysaccharide, for example starch, a modified starch, for example carboxymethyl starch, dextran, pullulan, tragacanth gum, xanthan gum, gum arabic, alginate, methyl cellulose, hydroxyethyl cellulose, hydroxypropyl cellulose, carboxymethyl cellulose, chitin, chitosan, pectin, carrageenan, guar, or a protein, for example gluten or gelatin.

10. The food casing as claimed in one or more of claims 1 to 9, wherein a component which decreases the water solubility is added to the coloring, aroma substance or flavoring and/or to the binder.

11. The food casing as claimed in claim 10, wherein the component which reduces the water solubility is shellac.

12. A method for producing the food casing as claimed in one or more of claims 1 to 11 comprising the steps of

1) providing a multilayer casing having an outside layer which comprises a mixture of a) thermoplastic starch and/or a thermoplastic starch derivative and b) at least one further polymer, and at least one barrier layer,
2) applying a coloring, aroma substance and/or flavoring to the outside of the casing and
3) reversing the casing, so that the outside passes to the inside.

13. The method as claimed in claim 12, wherein the coloring, aroma substance and/or flavoring is applied by spraying, printing, roller application, flocking, calendering and/or painting.

14. The use of the food casing as claimed in one or more of claims 1 to 11 for enveloping cooked-meat sausage or scalded-emulsion sausage, (boiled) ham, cured goods or processed cheese.

**Revendications**

1. Enveloppe pour denrées alimentaires en forme de tuyau, sans soudure, présentant une couche qui comprend un mélange constitué par a) de l'amidon thermoplastique et/ou un dérivé thermoplastique de l'amidon et b) au moins un autre polymère, **caractérisée en ce que** l'autre polymère est un homopolymère ou un copolymère avec des unités d'acide hydroxycarboxylique, un polyesteruréthane, un polyétheruréthane, un polyesterétheruréthane ou un polyalkylènecarbonate de formule - [CHR$^1$-CHR$^2$-O-CO-O-]$_n$, R$^1$ et R$^2$ représentant, indépendamment l'un de l'autre, un atome d'hydrogène ou un radical $(C_1-C_4)$alkyle et n représentant un nombre entier de 10 à 5 000, **en ce que** l'enveloppe est réalisée par coextrusion et est à plusieurs couches, la couche constituée par le mélange formant la couche interne et la ou les autres couches étant des couches formant une barrière et **en ce que** l'enveloppe porte à l'intérieur au moins un colorant, un parfum et/ou une substance gustative transférable.

2. Enveloppe pour denrées alimentaires selon la revendication 1, **caractérisée en ce que** le rapport pondéral d'amidon thermoplastique et/ou de dérivé thermoplastique d'amidon à l'autre polymère est de 90:10 à 10:90, de préférence de 20:80 à 80:20, de manière particulièrement préférée de 20:80 à 40:60.

3. Enveloppe pour denrées alimentaires selon la revendication 1, **caractérisée en ce que** le dérivé thermoplastique d'amidon est un ester d'amidon, de préférence un alcanoate d'amidon, de manière particulièrement préférée l'acétate d'amidon.

4. Enveloppe pour denrées alimentaires selon la revendication 1 ou 2, **caractérisée en ce que** le polymère b) est de préférence un polylactide, un poly(acide 3-hydroxy-propionique), un poly(acide 3-hydroxybutyrique), un poly(acide 4-hydroxy-butyrique) ou une polycaprolactone.

5. Enveloppe pour denrées alimentaires selon la revendication 1, **caractérisée en ce qu'**une couche est à base de polyamide, de polyoléfine, de polyester, de poly(chlorure de vinylidène) (PVDC), de poly(chlorure de vinyle)(PVC), de polystyrène ou de copolymères correspondants.

6. Enveloppe pour denrées alimentaires selon la revendication 5, **caractérisée en ce qu'**elle présente au moins une couche en polyamide et au moins une couche en polyoléfine.

7. Enveloppe pour denrées alimentaires selon la revendication 1, **caractérisée en ce que** le colorant, le parfum et/ou la substance gustative est une épice ou un mélange d'épices, un extrait d'épices, une fumée liquide ou sèche, un parfum naturel ou synthétique et/ou un exhausteur de goût.

8. Enveloppe pour denrées alimentaires selon la revendication 7, **caractérisée en ce que** le colorant, le parfum ou la substance gustative est combiné avec un liant autorisé par les lois sur les aliments.

9. Enveloppe pour denrées alimentaires selon la revendication 8, **caractérisée en ce que** le liant est un polysaccharide tel que l'amidon, un amidon modifié tel que le carboxyméthylamidon, le dextran, le pullulan, la gomme adragante, la gomme de xanthane, la gomme arabique, l'alginate, la méthylcellulose, l'hydroxyéthylcellulose, l'hydroxypropylcellulose, la carboxyméthylcellulose, la chitine, le chitosane, la pectine, le carragheen, la gomme guar, ou une protéine telle que le gluten ou la gélatine.

10. Enveloppe pour denrées alimentaires selon l'une ou plusieurs des revendications 1 à 9, **caractérisée en ce que** le colorant, le parfum, la substance gustative et/ou le liant est additionné d'un composant qui diminue la solubilité dans l'eau.

11. Enveloppe pour denrées alimentaires selon la revendication 10, **caractérisée en ce que** le composant qui diminue la solubilité dans l'eau est le Schellack.

12. Procédé pour la préparation de l'enveloppe pour denrées alimentaires selon l'une ou plusieurs des revendications 1 à 11 présentant les étapes

    1) préparation d'une enveloppe à plusieurs couches, présentant une couche externe qui contient un mélange constitué par a) de l'amidon thermoplastique et/ou un dérivé thermoplastique de l'amidon et b) au moins un autre polymère et au moins une couche formant une barrière,
    2) application d'un colorant, d'un arome et/ou d'une substance gustative sur la surface externe de l'enveloppe et
    3) retournement de l'enveloppe, de telle manière que la face externe se retrouve à l'intérieur.

13. Procédé la revendication 12, **caractérisé en ce que** le colorant, le parfum et/ou la substance gustative est appliqué par pulvérisation, impression, application au cylindre, saupoudrage, calandrage et/ou laquage.

14. Utilisation de l'enveloppe pour denrées alimentaires selon l'une ou plusieurs des revendications 1 à 11 pour envelopper de la saucisse à cuire ou à griller, du jambon (cuit), des produits salés ou du fromage fondu.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 709030 A
- EP 1054599 A
- DE 19822979 A
- WO 9831731 A
- EP 986957 A
- JP 2000139401 A
- DE 19846305 A
- DE 19515477 A
- WO 9635746 A
- WO 9005161 A
- WO 9010019 A